# EUROPÄISCHE PATENTSCHRIFT

(11) **EP 4 257 335 B1**
(45) Veröffentlichungstag und Bekanntmachung des Hinweises auf die Patenterteilung: **16.07.2025**
(21) Anmeldenummer: 22166469.1
(22) Anmeldetag: 04.04.2022
(51) Int. Cl.: B29C 51/42, B29C 51/06, B29K 29/00, B29L 25/00, B29L 31/00, B65B 3/02, B29C 51/10

(54) **VERFAHREN ZUR HERSTELLUNG VON WASCHMITTELPORTIONSEINHEITEN**
METHOD FOR THE PREPARATION OF WASHING AGENT PORTION UNITS
PROCÉDÉ DE FABRICATION DE PORTIONS UNITAIRES DE DÉTERGENT

(43) Veröffentlichungstag der Anmeldung: 11.10.2023
(73) Patentinhaber: Henkel AG & Co. KGaA, 40589 Düsseldorf (DE)
(72) Erfinder: Trebbe, Uwe, 40547 Düsseldorf (DE); Siepler, Niklas, 42327 Wuppertal (DE)

(56) Entgegenhaltungen:
- EP-A1- 1 375 637
- EP-A1- 3 738 751
- EP-A2- 0 055 082
- EP-B1- 3 078 478
- DE-A1- 2 019 295
- US-A1- 2018 282 672
- US-A1- 2022 081 656

## Beschreibung

Die vorliegende Erfindung betrifft Verfahren zur Herstellung von Portionseinheiten, insbesondere Wasch- oder Reinigungsmittelportionseinheiten mit mindestens einer, von einem Filmmaterial gebildeten Aufnahmekammer.

An die Konfektions- und Angebotsformen von Konsumgütern werden sich kontinuierlich ändernde Anforderungen gestellt. Im Bereich der Wasch- oder Reinigungsmittel liegt beispielsweise seit geraumer Zeit ein Augenmerk auf deren bequemer Dosierung durch den Verbraucher und der Vereinfachung der zur Durchführung eines Wasch- oder Reinigungsverfahren notwendigen Arbeitsschritte. Eine technische Lösung bieten vorportionierte Wasch- oder Reinigungsmittel, beispielsweise Folienbeutel mit einer oder mehreren Aufnahmekammern für feste oder flüssige Wasch- oder Reinigungsmittel.

Ein für die Herstellung dieser Folienbeutel relevanter Trend, ist die Miniaturisierung dieser Folienbeutel. Hintergrund dieser Entwicklung sind neben einer höheren Verbraucherakzeptanz aufgrund vereinfachter Handhabung insbesondere Nachhaltigkeitsaspekte, beispielsweise in Bezug auf die Menge der eingesetzten Verpackungsmittel.

Die Herstellung der zuvor beschriebenen Folienbeutel erfolgt durch mehrstufige Prozesse, in deren Verlauf wasserlösliche Folienmaterialien beispielsweise durch Einwirkung von Wärme und Unterdruck in Kavitäten eingeformt, befüllt und nachfolgend versiegelt werden. Während die Erwärmung der Folien deren Plastizität erhöht, bewirkt die aus dem an die erwärmte Folie angelegten Unterdruck resultierende Kraft deren Streckung und plastische Verformung. Der Film wird in diesem Verfahren über seine Fläche nicht homogen gestreckt, vielmehr wechseln Bereiche hoher Streckung, beispielsweise im Randbereich der Kavität mit Bereichen geringerer Streckung ab. Aus einem Folienmaterial mit homogener Foliendicke entsteht so eine verformte Folie in Form eines Aufnahmebehälters mit einer heterogenen Foliendickenverteilung. Diese heterogenen Foliendickenverteilung wird umso ausgeprägter ausfallen, je stärker das ursprüngliche Folienmaterial verformt wird. Die Stärke der Verformung nimmt in der Regel beispielsweise mit der Anzahl der in den Aufnahmebehälter eingeformten Aufnahmekammern oder deren Tiefe zu.

Neben anderen Faktoren bestimmen sowohl die Foliendickenverteilung als auch die absolute Foliendicke die haptischen, optischen und mechanischen Eigenschaften des Folienbeutels. Folienbeutel mit großen Unterschieden in der Foliendicke werden häufig als weniger ansprechend wahrgenommen. Folienbeutel mit geringer minimalen Foliendicke verformen sich leichter unter ihrem Eigengewicht als entsprechende Folienbeutel mit höherer Foliendicke und wirken schlaff. Diese Folienbeutel halten mechanischer Belastung in geringerem Maße stand und lösen sich bei Wasserzutritt zu schnell. Die beiden letztgenannten Eigenschaften sind für Folienbeutel nicht nur im Bereich von Herstellung, Transport und Lagerung relevant, sondern haben insbesondere Auswirkungen auf die Produktsicherheit, beispielsweise bei versehentlicher oraler Aufnahme.

Die europäische Patentanmeldung EP 3 738 751 A1 beschreibt ein Verfahren von kompakten Mehrkammertiefziehbeutel mit verminderter Siegelnahtbreite.

Mehrkammertiefziehbeutel mit spezifischer Geometrie und Verfahren zu deren Herstellung werden in den Patentanmeldungen US 2018/0282672 A1 und EP 1 375 637 A1 beschrieben.

Die Anmeldungen US 2022/0081656 A1, DE 20 19 295 A1 und EP 0 055 082 A2 haben Tiefziehverfahren zum Gegenstand, in deren Verlauf die Tiefziehfolie vor ihrer Verformung uneinheitlich erwärmt wird.

DE 20 19 295 A1, EP 0 055 082 A2 offenbaren Verfahren nach dem Oberbegriff des Anspruchs 1. Eine Heizvorrichtung, welche geeignet ist, auf einer Folienbahn ein Temperaturprofil zu erzeugen, ist Gegenstand des europäischen Patents EP 3 078 478 B1.

Zur Erhöhung der Homogenität der Wanddicke bei Tiefziehverfahren schlägt die internationale Anmeldung WO 2019/206448 A1 ein Tiefziehverfahren vor, in dessen Verlauf eine flache Folie mit einem Temperaturprofil beaufschlagt wird.

Mit der gleichen Zielsetzung werden in der europäischen Patentanmeldung EP2298536 A2 und der internationalen Patentanmeldung WO 2020/152044 A1 Heizvorrichtung unter Einsatz von Heizvorrichtungen mit heterogener Temperaturverteilung vorgeschlagen.

Diese zuvor beschriebenen Lösungsansätze sind jedoch apparativ aufwändig und eignen sich nur in bedingtem Maße für hohe Durchsätze. Darüber hinaus ist die Einrichtung ebenso wie die Umstellung entsprechender Tiefziehlinien kostenträchtig.

Vor diesem technischen Hintergrund lag der Anmeldung die Aufgabe zugrunde, ein Verfahren zur Herstellung von Portionseinheiten bereitzustellen, welche bei minimalem apparativem Aufwand und minimalem Einsatz zur Verpackung eingesetzter Filmmaterialien die effiziente Herstellung von Portionseinheiten mit maximaler Stabilität und ansprechender Optik und Haptik ermöglicht.

Ein erster Anmeldungsgegenstand ist Verfahren zur Herstellung einer Portionseinheit mit mindestens einer von einem Film umgebenden befüllten Aufnahmekammer, umfassend die Schritte
a) Transport eines ersten Films in Richtung einer Heizvorrichtung;
b) In Kontakt Bringen des ersten Films mit einer Oberfläche der Heizvorrichtung;
c) Erwärmen des ersten Films mittels der Heizvorrichtung;
d) Aufheben des Kontakts zwischen dem ersten Film und der Heizvorrichtung;
e) Einformen des ersten erwärmten Films in die Kavitäten einer Tiefziehmatrize unter Ausbildung eines Aufnahmebehälters mit mindestens einer Aufnahmekammer;
f) Befüllen der mindestens einen Aufnahmekammer;
g) gegebenenfalls Verschließen und Vereinzeln der befüllten Aufnahmebehälter unter Ausbildung der Portionseinheit,
wobei der Oberflächenbereich der Heizvorrichtung, der mit dem Film in Kontakt gebracht wird, mindestens eine Vertiefung aufweist und die mindestens eine Vertiefung in Schritt b) von den Teilbereichen des ersten Films bedeckt wird, welche in Schritt e) in die Kavität der Tiefziehmatrize eingeformt werden, wobei der Umriss der Öffnungsfläche der Vertiefung dem Umriss der Öffnungsfläche der Kavität nachgebildet ist, dadurch gekennzeichnet, dass der Umriss der Öffnungsfläche der Vertiefung aus dem Umriss der Öffnungsfläche der Kavität durch einen Verkleinerungsfaktor von 0,6 bis 0,8 erhalten wird.

Das erfindungsgemäße Verfahren ermöglicht die effiziente Herstellung der Waschmittelportionseinheiten. Die Waschmittelportionseinheiten zeichnen sich aufgrund einer gleichförmigen Dicke des wasserlöslichen Films durch eine hohe mechanische Stabilität bei geringem Verpackungsmitteleinsatz sowie eine ansprechende Haptik und Optik aus.

Im Rahmen des erfindungsgemäßen Verfahrens werden vorzugsweise wasserlösliche Filme in einer Tiefziehapparatur umgeformt und mit Waschmittelzubereitungen zu Waschmittelportionseinheiten kombiniert.

Der wasserlösliche Film kann ein oder mehrere strukturell verschiedene wasserlösliche(s) Polymer(e) umfassen. Als wasserlösliche(s) Polymer(e) für den ersten wasserlöslichen Film eignen sich insbesondere Polymere aus der Gruppe (gegebenenfalls acetalisierter) Polyvinylalkohole (PVAL) sowie deren Copolymere.

Wasserlösliche Filme zur Herstellung der Portionseinheit basieren bevorzugt auf einem Polyvinylalkohol oder einem Polyvinylalkoholcopolymer, dessen Molekulargewicht bevorzugt im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt. Bevorzugte wasserlösliche Filme umfassen mindestens 30 Gew.-%, vorzugsweise mindestens 50 Gew.-% und insbesondere mindestens 70 Gew..% Polyvinylalkohol oder Polyvinylalkoholcopolymere.

Die Herstellung der Polyvinylalkohol und Polyvinylalkoholcopolymere schließt in der Regel die Hydrolyse intermediären Polyvinylacetats ein. Bevorzugte Polyvinylalkohole und Polyvinylalkoholcopolymere weisen einen Hydrolysegrad 70 bis 100 Mol-%, vorzugsweise 80 bis 90 Mol-%, besonders bevorzugt 81 bis 89 Mol-% und insbesondere 82 bis 88 Mol-% auf.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Sulfonsäuren wie die 2-Acrylamido-2-methyl-1-propansulfonsäure (AMPS), Acrylsäure, Methacrylsäure, Acrylsäureester, Methacrylsäureester oder Mischungen daraus; unter den Estern sind C₁₋₄-Alkylester oder - Hydroxyalkylester bevorzugt. Als weitere Monomere kommen ethylenisch ungesättigte Dicarbonsäuren, beispielsweise Itaconsäure, Maleinsäure, Fumarsäure und Mischungen daraus in Betracht.

Geeignete wasserlösliche Folien zum Einsatz in den Portionseinheiten gemäß der Erfindung sind Folien, die von der Firma MonoSol LLC beispielsweise unter der Bezeichnung M8630, M8720, M8310, C8400 oder M8900 vertrieben werden. Andere geeignete Folien umfassen Folien mit der Bezeichnung Solublon^{®} PT, Solublon^{®} GA, Solublon^{®} KC oder Solublon^{®} KL von der Aicello Chemical Europe GmbH oder die Folien VF-HP von Kuraray sowie die Hi-Selon Serie der Mitsubishi Chemical Corporation.

Der erste, vorzugsweise wasserlösliche Film weist vorzugsweise eine Dicke von 10 bis 90 µm, bevorzugt von 30 bis 60 µm auf.

Die wasserlöslichen Filme können als weitere Inhaltsstoffe zusätzliche Wirk- oder Füllstoffe aber auch Weichmacher und/oder Lösungsmittel, insbesondere Wasser, enthalten.

Zur Gruppe der weiteren Wirkstoffe zählen dabei beispielsweise Materialien, welche die von dem Filmmaterial umschlossenen Inhaltsstoffe des Waschmittels vor Zersetzung oder Desaktivierung durch Lichteinstrahlung schützen. Als besonders geeignet haben sich hier Antioxidantien, UV-Absorber und Fluoreszensfarbstoffe erwiesen.

Als Weichmacher können beispielsweise Glycerin, Ethylenglycol, Diethylenglycol, Propandiol, 2-Methyl-1,3-propandiol, Sorbit oder deren Gemische eingesetzt werden.

Zur Verminderung ihrer Reibungskoeffizienten kann die Oberfläche des wasserlöslichen Films der Waschmittelportionseinheit optional mit feinem Pulver abgepudert werden. Natriumaluminosilicat, Siliciumdioxid, Talk und Amylose sind Beispiele für geeignete Pudermittel.

Die in dem Verfahren eingesetzte Tiefziehapparatur kann kontinuierlich oder diskontinuierlich betrieben werden. Zur Erhöhung der Verfahrenseffizienz ist eine kontinuierliche Verfahrensweise bevorzugt. In einer besonders bevorzugten Ausführungsform des Verfahrens erfolgt der Transport des ersten, vorzugsweise wasserlöslichen Films in Schritt a) kontinuierlich. Im Hinblick auf die Verfahrensökonomie und Verfahrenssicherheit ist es bevorzugt, den ersten, vorzugsweise wasserlöslichen Film in Schritt a) mit einer Geschwindigkeit 0,04 m/s, vorzugsweise oberhalb 0,08 m/s zu transportieren.

Der die Vertiefung umgebende Oberflächenbereich der Heizvorrichtung, mit welchem der Film in Schritt b) in Kontakt gebracht wird, ist vorzugsweise plan ausgebildet. Besonders bevorzugte Materialien zur Fertigung der Oberfläche Heizvorrichtung, mit welcher der wasserlösliche Film in Schritt b) in Kontakt steht, sind Keramik oder Metall, insbesondere Aluminium.

Bevorzugte Heizvorrichtungen weise eine metallische Oberfläche, insbesondere eine metallische Oberfläche auf, welche Aluminium umfasst. Aufgrund ihrer wärmeleitenden Eigenschaften werden metallische Heizvorrichtungsoberflächen bevorzugt, welche zu mindestens 70 Gew.-%, vorzugsweise zu mindestens 90 Gew.-%, besonders bevorzugt zu mindestens 98 Gew.-% und insbesondere vollständig aus Aluminium bestehen.

Die planen Oberflächenbereiche der Heizvorrichtung können zur Steuerung der Wärmeübertragung oder zur Vermeidung von Anhaftungen strukturiert sein. Derart strukturierte Oberflächen weisen beispielsweise sicht- oder spürbare Unebenheiten wie Rillen auf. Die Strukturelemente unterscheiden sich von den Vertiefungen naturgemäß in Hinblick auf ihre Tiefe und ihre Breite. In bevorzugten strukturierten Oberflächenbereichen beträgt die maximale Tiefe der Strukturelemente weniger als 0,5 mm, vorzugsweise weniger als 0,2 mm und insbesondere weniger als 0,1 mm. Die maximale Tiefe entspricht der maximalen Länge einer zur Öffnungsfläche orthogonalen Strecke zwischen einem Punkt auf der Öffnungsfläche und einem Punkt auf der Bodenfläche des Strukturelements.

Bevorzugte Heizvorrichtungen weisen eine umlaufende Umrandung auf. Die Umrandung schließt den plan ausgebildeten Oberflächenbereich und die in diesem Oberflächenbereich ausgebildete Vertiefung oder die die in diesem Oberflächenbereich ausgebildeten Vertiefungen ein. Vorzugsweise werden von der Umrandung mindestens vier, bevorzugt mindestens acht und insbesondere mindestens sechzehn Vertiefungen umschlossen.

Mittels der Umrandung wird ein über die Heizvorrichtung verbrachter Film von der beheizten Oberfläche beabstandet. Ein Kontakt zwischen Film und Oberfläche der Heizvorrichtung tritt dadurch erst durch gezielte Krafteinwirkung, beispielsweise durch Anlegen eines Unterdrucks zwischen Heizvorrichtungsoberfläche und Film, ein. Im Ergebnis lassen sich die Kontaktzeiten zwischen der beheizten Oberfläche und dem Film auch bei hohen Verfahrensgeschwindigkeiten gezielt steuern. Da bei geringer Umrandungshöhe der beschriebene Beabstandungseffekt in geringerem Maß ausgeprägt ist, während bei hoher Umrandungshöhe die Wirkung des eingesetzten Unterdrucks vermindert wird, beträgt die Höhe der Umrandung vorzugsweise 0,5 bis 2 mm, besonders bevorzugt 0,8 bis 1,2 mm. Eine Umrandungshöhe von 1 mm wird ganz besonders bevorzugt.

Zusammenfassend ist eine bevorzugte Verfahrensvariante dadurch gekennzeichnet, dass der die Vertiefung umgebende Oberflächenbereich der Heizvorrichtung plan ausgebildet und von einer umlaufenden Umrandung mit einer Höhe von 0,5 bis 2 mm, vorzugweise von 0,8 bis 1,2 mm umschlossen ist.

In Bezug auf die angestrebte homogene Filmdehnung hat es sich als vorteilhaft erwiesen, wenn die Öffnungsfläche der mindestens einen Vertiefung kleiner ist als die Öffnungsfläche der Kavität.

Für die Erzielung einer homogenen Filmdehnung ist es weiterhin vorteilhaft, den Umriss der Öffnungsfläche der Vertiefung dem Umriss der Öffnungsfläche der Kavität nachzubilden. Als Nachbildung wird die zweidimensionale Form der Öffnungsfläche einer Vertiefung bezeichnet, welche der zweidimensionalen Form der Öffnungsfläche der Kavität beispielsweise in Bezug auf die Anzahl der vorhandenen Ecken gleicht.

Besonders vorteilhaft ist es, wenn der Umriss der Öffnungsfläche der Vertiefung aus dem Umriss der Öffnungsfläche der Kavität durch eine Verkleinerung erhalten wird, wobei vorzugsweise Verkleinerungsfaktoren von 0,6 bis 0,8 angewendet werden.

Bevorzugte Vertiefungen weisen eine Öffnungsfläche mit einem maximalen Durchmesser von 10 bis 40 mm, vorzugsweise von 20 bis 35 mm auf. Die maximale Tiefe bevorzugter Vertiefungen beträgt 0,5 bis 7 mm, vorzugsweise von 0,8 bis 4 mm. Die maximale Tiefe entspricht der maximalen Länge einer zur Öffnungsfläche orthogonalen Strecke zwischen einem Punkt auf der Öffnungsfläche und einem Punkt auf der Bodenfläche der Vertiefung.

Die Vertiefungen können unterschiedliche Raumformen aufweisen. Bevorzugte Vertiefungen weisen neben dem Rand der Öffnungsfläche höchstens einen weiteren Rand auf. Bevorzugt ist es weiterhin, wenn die Vertiefungen keine zur Öffnungsfläche orthogonalen Seitenflächen aufweisen. Bevorzugt sind vielmehr Vertiefungen, welche ausschließlich durch ihre Öffnungsfläche und eine direkt an die Öffnungsfläche anschließende Bodenfläche begrenzt sind. Besonders bevorzugte Vertiefungen weisen beispielsweise eine halbkugelförmige, gestaucht halbkugelförmige, gestreckt halbkugelförmige oder gestaucht und gestreckt halbkugelförmige Raumform auf. Die Bodenfläche kann abgeflacht sein, beispielsweise in Form eines zur Öffnungsfläche planparallelen Bereichs.

Bevorzugte Vertiefungen sind durch eine von ihrem Rand bis zu ihrem tiefsten Punkt kontinuierlich abfallende Bodenfläche gekennzeichnet. Selbstverständlich kann die Vertiefung mehr als einen tiefsten Punkt aufweisen. Beispielsweise kann die Vertiefung, wie zuvor beschrieben, eine zur Öffnungsfläche anteilsweise planparallele Bodenfläche aufweisen. In einer solchen Ausführungsform weist die Bodenfläche zwischen dem Rand der Vertiefung und dem Rand des planparallelen Bereichs der Bodenfläche ein kontinuierliches Gefälle auf.

Das Gefälle kann linear oder nichtlinear verlaufen. Sowohl das absolute Gefälle als auch dessen relativer Verlauf haben sich als relevant für die erzielte Filmdickenhomogenität erwiesen. Bevorzugte Vertiefungen weisen eine von ihrem Rand bis zu ihrem tiefsten Punkt kontinuierlich abfallende Bodenfläche auf, deren Gefälle auf der kürzesten Strecke vom Rand bis zum tiefsten Punkt zu wenigstens 10%, vorzugsweise zu 30% der Strecke linear verläuft. Als vorteilhaft haben sich beispielsweise Verfahrensvarianten unter Einsatz von Vertiefungen erwiesen, welche eine von ihrem Rand bis zu ihrem tiefsten Punkt kontinuierlich abfallende Bodenfläche aufweisen, deren Gefälle auf der kürzesten Strecke vom Rand bis zum tiefsten Punkt von 10 bis 90%, vorzugsweise von 30 bis 80% der Strecke linear verläuft.

Bevorzugt ist es, wenn die Vertiefung eine von ihrem Rand bis zu ihrem tiefsten Punkt kontinuierlich abfallende Bodenfläche aufweist, deren Gefälle auf der kürzesten Strecke vom Rand bis zum tiefsten Punkt sich an mindestens einem Punkt ändert.

Vorzugsweise weist die Vertiefung eine von ihrem Rand bis zu ihrem tiefsten Punkt kontinuierlich abfallende Bodenfläche auf, deren Gefälle auf der kürzesten Strecke vom Rand bis zum tiefsten Punkt über die gesamte Strecke 10 bis 50%, vorzugsweise 15 bis 40% beträgt.

Das Volumen bevorzugter Vertiefungen beträgt 1 bis 8 ml, vorzugweise von 1 bis 6 ml.

Das Verhältnis der maximalen Tiefe der Vertiefung in Schritt b) zur maximalen Tiefe der Kavität in Schritt e) beträgt vorzugsweise 2:3 bis 1 zu 5, besonders bevorzugt 1:2 bis 1:4. Ein entsprechendes Verhältnis hat sich sowohl im Hinblick auf die Homogenität der Foliendickenverteilung als auch in Bezug auf die Prozessführung als vorteilhaft erwiesen.

Das erfindungsgemäße Verfahren eignet sich insbesondere zur Herstellung von Portionseinheiten mit komplexen Geometrien oder für Portionseinheiten mit mehr als einer Aufnahmekammer. In einer bevorzugten Ausbildung des Verfahrens weist die Portionseinheit daher mindestens zwei, vorzugsweise mindestens drei und insbesondere mindestens vier Aufnahmekammern auf, wobei die Heizvorrichtung eine der Anzahl der Aufnahmekammern entsprechende Zahl an Vertiefungen aufweist, die in Schritt b) von den Teilbereichen des ersten Films bedeckt werden, welche in Schritt e) in die Kavität der Tiefziehmatrize unter Ausbildung der mindestens zwei, vorzugsweise mindestens drei und insbesondere mindestens vier Aufnahmekammern eingeformt werden.

Werden Portionseinheiten mit zwei oder mehr Aufnahmekammern hergestellt, so können sich die Aufnahmekammern im Hinblick auf ihre Raumform oder ihre Abmessungen identisch sein, können sich jedoch auch unterscheiden. Die Vorzüge des erfindungsgemäßen Verfahrens in Bezug auf die Erzielung homogener Foliendickenverteilungen werden insbesondere auch bei der Herstellung von Portionseinheiten mittels Heizvorrichtungen offenkundig, welche mindestens zwei Vertiefungen aufweisen, die sich hinsichtlich ihrer maximalen Tiefe unterscheiden.

Zwischen zwei benachbarten, einer Portionseinheit zugehörigen Vertiefungen ist die Oberfläche der Heizvorrichtung vorzugsweise plan ausgebildet. Der minimale Abstand zwischen zwei derartigen benachbarten Vertiefungen beträgt vorzugsweise 0,5 bis 4 mm vorzugsweise 1 bis 3 mm.

In einer bevorzugten Ausführungsform sind die zwei, drei oder vier Aufnahmekammern und folglich auch die den Aufnahmekammern zugeordneten Vertiefungen einander wenigstens anteilsweise umschließend angeordnet. Diese Verfahrensweise wird beispielsweise bei der Herstellung von Portionseinheiten mit mindestens zwei, vorzugsweise mindestens drei und insbesondere mindestens vier Aufnahmekammern realisiert, deren eine Kammer einen Mittelpunkt bildet, um den die verbleibenden Kammern rotationssymmetrisch angeordnet sind.

Wie eingangs ausgeführt, weist die Heizvorrichtung vorzugsweise eine metallische Oberfläche auf. Diese vorzugsweise metallische Oberfläche weist wiederum Vertiefungen auf, welche bei minimalem apparativem Aufwand und minimalem Einsatz zur Verpackung eingesetzter Filmmaterialien die effiziente Herstellung von Portionseinheiten mit maximaler Stabilität und ansprechender Optik und Haptik ermöglichen.

Diese vorteilhaften Eigenschaften des erfindungsgemäßen Verfahrens lassen sich durch eine wenigstens anteilsweise Beschichtung der Oberfläche der Heizvorrichtung verstärken. Besonders vorteilhaft ist es dabei, die Oberfläche der Heizvorrichtung im Bereich der Vertiefung wenigstens anteilsweise beschichtet ist. Eine entsprechende Beschichtung beeinflusst, wie die in der Oberfläche befindlichen Vertiefungen, die Filmdickenverteilung der hergestellten Aufnahmebehälter. Als vorteilhaft hat es sich in diesem Zusammenhang erweisen, die Oberfläche der Heizvorrichtung im Bereich der Vertiefung(en) vollflächig zu beschichten.

Die Beschichtung kann sich auf die Oberfläche der Heizvorrichtung im Bereich der Vertiefung(en) und den die Vertiefung umgebenden Randbereich erstrecken.

Die Beschichtung der Heizvorrichtungsoberfläche im Bereich der Vertiefungen führt notwendigerweise zu einer wenigstens anteilsweisen Befüllung des Vertiefungsvolumens. In Varianten des erfindungsgemäßen Verfahrens ist die mindestens eine Vertiefung zu mindestens 60 Vol.-%, vorzugsweise zu mindestens 80 Vol.-% und insbesondere vollständig mit einem Beschichtungsmaterial verfüllt.

Die Beschichtung kann 5 bis 80 %, vorzugsweise 10 bis 70% und insbesondere 20 bis 50% des Oberflächenbereichs der Heizvorrichtung, welcher in Schritt b) mit dem Film in Kontakt gebracht wird, bedecken.

Als Material für die Beschichtung eignen sich Beschichtungsmaterialien aus der Gruppe der Metalle und der Polymere, insbesondere der Gummis und der Silikone. Die Beschichtung mit Silikonen ist aufgrund ihrer Wärmebeständigkeit und Formbarkeit besonders bevorzugt.

Bevorzugte Beschichtungsmittel weisen eine geringere Wärmeleitfähigkeit und/oder einen geringeren Wärmeübergangskoeffizienten auf als die Heizvorrichtungsoberfläche.

Die Dicke der Beschichtung beträgt vorzugsweise 100 bis 4000µm, besonders bevorzugt 200 bis 2000 µm.

Etwaige Beschichtungen können mit der Grundfläche in unterschiedlicher Weise verbunden werden. So eignen sich Haftverbindungen zur Ausbildung einer anhaltenden und zeitlich ortsstabilen Bindung zwischen der Heizvorrichtungsoberfläche und dem Beschichtungsmittel. Klemm- oder Steckverbindungen werden wiederum vorzugsweise in den Fällen eingesetzt, in denen eine schnelle Austauschbarkeit der Beschichtungsmittel, beispielsweise aufgrund von Verschleiß oder zur Änderung der Verfahrensparameter angestrebt wird.

Für die Foliendickenverteilung des Verfahrensproduktes hat es sich als vorteilhaft erwiesen, wenn die Beschichtung in Schritt b) mit dem Oberflächenanteil des wasserlöslichen Films in Kontakt steht, welcher in Schritt e) in die Kavität der Tiefziehmulde eingeformt wird.

In einer bevorzugten Verfahrensvariante wird der erste Film in Schritt b) nur an einer Seite mit der Heizvorrichtung in Kontakt gebracht. Im Vergleich zu Verfahren unter Einsatz von zwei Heizvorrichtungen ist das erfindungsgemäße Verfahren damit nicht nur mit einem geringeren apparativen Aufwand verbunden, es ermöglicht zudem ein kompakteres Design der Produktionsstraße.

Bevorzugt wird in Schritt b) die Oberseite des Films mit der Heizvorrichtung in Kontakt gebracht. Als Oberseite wird dabei die räumlich noch oben orientierte Seite des Films bezeichnet. Hierzu wird die Heizvorrichtung in Schritt b) vorzugsweise in Richtung des Films abgesenkt.

Zur Verringerung der Prozessdauer und zur Sicherstellung eines reproduzierbaren Kontakts zwischen dem ersten wasserlöslichen Film und der Oberfläche der Heizvorrichtung wird der Film in Schritt b) mittels eines Unterdrucks mit der Heizvorrichtung in Kontakt gebracht. Weiterhin ist es bevorzugt, den Kontakt zwischen dem Film und der Heizvorrichtung durch Beibehaltung eines Unterdrucks aufrecht zu erhalten. Die Höhe eines entsprechenden Unterdrucks, welcher in Schritt b) zwischen Heizvorrichtung und Film aufgebaut wird, beträgt vorzugsweise 200 bis 800 mbar und insbesondere 400 bis 700 mbar.

Zur Unterstützung der gleichmäßigen Ausbildung eines Unterdrucks zwischen Heizvorrichtung und wasserlöslichem Film weist die Oberfläche der Heizvorrichtung vorzugsweise Bohrungen auf, mittels derer zwischen Heizvorrichtung und Film befindliches Gas abgeführt werden kann. Diese Bohrungen befinden sich vorzugsweise zu 60%, bevorzugt zu 90%, insbesondere zu 95% und ganz besonders bevorzugt vollständig außerhalb der Vertiefungen.

In Schritt c) wird der Film vorzugsweise für einen Zeitraum von 0,5 bis 7 Sekunden, bevorzugt von 1 bis 6 Sekunden und insbesondere von 2 bis 5 Sekunden erwärmt.

Die metallische Oberfläche der Heizvorrichtung weist vorzugswese eine Temperatur im Bereich von 23 bis 150°C, vorzugsweise von 80 bis 135°C auf. Besonders bevorzugt ist es, wenn die Oberfläche der Heizvorrichtung im Bereich der Erhebung(en) mit welchen der wasserlösliche Film in Schritt b) in Kontakt steht, eine Temperatur im Bereich von 90 bis 150°C, vorzugsweise von 110 bis 135°C aufweist.

Zur weiteren Angleichung der Dehnfaktoren der unterschiedlichen Abschnitte des den Aufnahmebehälter ausbildenden wasserlöslichen Films hat es sich weiterhin als vorteilhaft erwiesen, wenn die mindestens eine Erhebung in Schritt c) mit jedem Flächenabschnitten des wasserlöslichen Films in Berührung steht, welche den Randbereich der Aufnahmekammer(n) des Aufnahmebehälters bilden. Aus den gleichen Gründen ist es bevorzugt, dass die Flächenabschnitte des wasserlöslichen Films, welche den Bodenbereich der Aufnahmekammer(n) des Aufnahmebehälters bilden, in Schritt c) nicht mit der Heizvorrichtung in Berührung stehen.

Zur Steigerung der Verfahrenseffizienz und zur Steigerung der Filmdickenhomogenität im Rahmen des erfindungsgemäßen Verfahrens hat es sich als vorteilhaft erwiesen, wenn sich der Film in Schritt c) zwischen der Heizvorrichtung und der in Schritt e) eingesetzten Tiefziehmatrize, vorzugsweise unterhalb der Heizvorrichtung und oberhalb der in Schritt e) eingesetzten Tiefziehmatrize befindet, wobei der Abstand zwischen der Oberfläche der Heizvorrichtung und der Tiefziehmatrize vorzugsweise weniger als 10 mm, bevorzugt weniger als 5 mm, insbesondere 0,1 bis 2 mm und besonders bevorzugt 0,2 bis 1 mm beträgt.

In Schritt d) wird der Kontakt zwischen dem ersten wasserlöslichen Film und der Oberfläche der Heizvorrichtung aufgehoben. Hierzu wird der gegebenenfalls zwischen der Heizvorrichtung und dem Film wirkende Unterdruck beseitigt. In einer besonders bevorzugten Ausführungsform des Verfahrens wird in Schritt d) ein zuvor zwischen der Heizvorrichtung und dem Film erzeugter Unterdruck beseitigt und zeitgleich oder nachfolgend die Heizvorrichtung angehoben.

Der Film weist zu Beginn von Schritt e) vorzugsweise eine Temperatur oberhalb seiner Glasübergangstemperatur auf.

In Schritt e) wird der Film in die Kavität einer Tiefziehmatrize eingeformt. Hierzu wird vorzugsweise für die Dauer von 0,5 bis 7 Sekunden bevorzugt von 1 bis 5 Sekunden ein Unterdruck zwischen dem Film und der Tiefziehmatrize aufgebaut. Dieser zwischen dem Film und der Tiefziehmatrize erzeugte Unterdruck beträgt vorzugsweise 100 bis 600 mbar und insbesondere 200 bis 400 mbar.

Bei der Einformung in die Kavität der Tiefziehmatrize wird die Oberfläche des wasserlöslichen Films vorzugsweis um mindestens 80%, vorzugsweise um mindestens 120%, insbesondere um 120 bis 300%, besonders bevorzugt um 180 bis 260% vergrößert. Entsprechend weist der Film im Anschluss an den Schritt e) einen Gesamtstreckfaktor von vorzugsweise mindestens 1,2, bevorzugt von 1,2 bis 3,0 und insbesondere von 1,8 bis 2,6 auf. Gleichzeitig beträgt der maximale lokale Streckfaktor des wasserlöslichen Films im Anschluss an Schritt e) vorzugsweise 1,8 bis 4, besonders bevorzugt von 2 bis 2,8.

Bevorzugt ist es insbesondere, wenn der wasserlösliche Film in Schritt e) unter Ausbildung eines Aufnahmebehälters mit mindestens zwei, vorzugsweise mindestens drei und insbesondere mindestens vier Aufnahmekammern eingeformt wird.

Die in Schritt e) gebildete(n) Aufnahmekammer(n) in Schritt e) weisen vorzugsweise ein Füllvolumen von 2 bis 8 ml, besonders bevorzugt von 3 bis 7 ml auf. Das Füllvolumen des Aufnahmebehälter in Schritt e) beträgt vorzugsweise 2 bis 50 ml, bevorzugt 10 bis 40 ml und insbesondere 13 bis 25 ml.

In bevorzugten Verfahrensvarianten, bei denen der Aufnahmebehälter mindestens zwei, vorzugsweise mindestens drei und insbesondere mindestens vier Aufnahmekammern aufweist, beträgt das Verhältnis des Volumens der größten Aufnahmekammer zum Volumen der kleinsten Aufnahmekammer 4:1 bis 1:1, vorzugsweise 3:1 bis 1:1.

Aus Gründen der Prozesseffizienz ist das erfindungsgemäße Verfahren derart ausgestaltet, dass in einem Verfahrensdurchlauf nicht lediglich eine einzige Waschmittelportionseinheit, sondern parallel eine Mehrzahl von Waschmittelportionseinheiten hergestellt wird. Vorzugsweise wird in Schritt e) ein Flächengebilde mit mindestens 14, vorzugsweise mindestens 20 Aufnahmebehältern ausgebildet.

In diesem Flächengebilde sind die Aufnahmebehälter vorzugsweise in Reihen angeordnet. Im Hinblick auf die nachfolgende Befüllung sind die in Schritt e) ausgebildeten Flächengebilde vorzugsweise in Reihen angeordnet, welche orthogonal zur Transportrichtung des wasserlöslichen Films angeordnet sind.

In einer alternativen Ausführungsform wird in Schritt e) ein Flächengebilde ausgebildet, in welchem die Aufnahmebehälter in Reihen angeordnet sind, welche orthogonal zur Transportrichtung des wasserlöslichen Films verlaufen und zueinander jeweils um ein Drittel der Breite eines Aufnahmebehälters, vorzugsweise um die Hälfte der Breite eines Aufnahmebehälters versetzt sind.

In dem Flächengebilde sind die Aufnahmebehälter vorzugsweise derart angeordnet, dass jeder Aufnahmebehälter mindestens einem Zwischenbereich benachbart ist, welcher seinerseits von drei Aufnahmebehältern umgeben ist.

Die mindestens eine Aufnahmekammer des Aufnahmebehälters wird in Schritt f) befüllt. Zur Befüllung eignen sich feste und flüssige Wasch- oder Reinigungsmittel.

Insbesondere in Fällen, in denen die eingefüllten Wasch- oder Reinigungsmittel nicht haftend mit dem wasserlöslichen Filmmaterial verbunden sind, wie dies beispielsweise bei Schmelzen der Fall sein kann, wird die befüllte Aufnahmekammer des Aufnahmebehälters verschlossen. Entsprechende Verfahren, in deren Verlauf die Aufnahmekammer des Aufnahmebehälters in einem weiteren Schritt f) befüllt und die befüllte Aufnahmekammer in einem nachfolgenden Schritt g) mittels eines zweiten wasserlöslichen Films verschlossen wird, sind im Hinblick auf die Produktästhetik und -handhabbarkeit bevorzugt.

### Beispiele

Ein wasserlöslicher Polyvinylalkoholfilm (Dicke 88µm) wurde mittels variierender Heizvorrichtungen erwärmt und nachfolgend durch Einwirkung eines Unterdrucks zu einer tropfenförmigen Aufnahmekammer umgeformt. Die Temperatur der Heizplatte betrug jeweils 120°C. Mit Ausnahme der eingesetzten Heizvorrichtung waren die in den Versuchen eingesetzten Verfahrensparameter identisch.

Die folgenden beiden Heizvorrichtungen wurden eingesetzt:
Heizvorrichtung 1: vollständig plane Heizplatte (Aluminium)
Heizvorrichtung 2: Heizplatte (Aluminium) mit einer Vertiefung (maximale Tiefe 1mm) deren Umriss der tropfenförmigen Aufnahmekammer mit einem Verkleinerungsfaktor von 0,8 nachempfunden ist

Im Anschluss an den Tiefziehprozess wurde die Filmdicke in den Aufnahmekammern durch optische Verfahren (Film Thickness Analyzer) entlang eines zur Längsachse des Tropfens orthogonalen Querschnitts ermittelt. Die Messung der Filmdicke erfolgte entlang des Querschnitts an jeweils neun äquidistant voneinander entfernten Messpunkten.

### Filmdicke ([µm])

| | 1 | 2 | 3 | 4 | 5 | 6 | 7 | 8 | 9 |
|---|---|---|---|---|---|---|---|---|---|
| Heizvorrichtung 1 | 34,6 | 29,6 | 27,1 | 24,4 | 25,9 | 24,7 | 24,1 | 27,1 | 33,3 |
| Heizvorrichtung 2 | 36,6 | 34,1 | 32,0 | 35,0 | 35,0 | 34,6 | 25,9 | 33,7 | 43,8 |

Die mittels der mit Vertiefungen versehenen Heizplatte erhaltenen Aufnahmekammern zeichnen sich bei identischen Ausgangsfilm durch eine höhere Filmdicke aus. Portionseinheiten, welche durch die Befüllung mit einem Flüssigwaschmittel und nachfolgende Versiegelung mittels eines zweiten wasserlöslichen Films erhalten wurden, wiesen eine verbesserte mechanische Stabilität auf.

## Patentansprüche

1. Verfahren zur Herstellung einer Portionseinheit mit mindestens einer von einem Film umgebenden befüllten Aufnahmekammer, umfassend die Schritte
a) Transport eines ersten Films in Richtung einer Heizvorrichtung;
b) In Kontakt Bringen des ersten Films mit einer Oberfläche der Heizvorrichtung;
c) Erwärmen des ersten Films mittels der Heizvorrichtung;
d) Aufheben des Kontakts zwischen dem ersten Film und der Heizvorrichtung;
e) Einformen des ersten erwärmten Films in die Kavitäten einer Tiefziehmatrize unter Ausbildung eines Aufnahmebehälters mit mindestens einer Aufnahmekammer;
f) Befüllen der mindestens einen Aufnahmekammer;
g) gegebenenfalls Verschließen und Vereinzeln der befüllten Aufnahmebehälter unter Ausbildung der Portionseinheit,
wobei der Oberflächenbereich der Heizvorrichtung, der mit dem Film in Kontakt gebracht wird, mindestens eine Vertiefung aufweist und die mindestens eine Vertiefung in Schritt b) von den Teilbereichen des ersten Films bedeckt wird, welche in Schritt e) in die Kavität der Tiefziehmatrize eingeformt werden, wobei der Umriss der Öffnungsfläche der Vertiefung dem Umriss der Öffnungsfläche der Kavität nachgebildet ist, **dadurch gekennzeichnet, dass** der Umriss der Öffnungsfläche der Vertiefung aus dem Umriss der Öffnungsfläche der Kavität durch einen Verkleinerungsfaktor von 0,6 bis 0,8 erhalten wird.

2. Verfahren nach Anspruch 1, wobei die Vertiefung eine halbkugelförmige, gestaucht halbkugelförmige, gestreckt halbkugelförmige oder gestaucht und gestreckt halbkugelförmige Raumform aufweist.

3. Verfahren nach einem der vorherigen Ansprüche, wobei die Vertiefung eine maximale Tiefe (gemessen als orthogonaler Abstand zwischen der Öffnungsfläche und der Bodenfläche der Vertiefung) von 0,5 bis 7 mm, vorzugsweise von 0,8 bis 4 mm aufweist.

4. Verfahren nach einem der vorherigen Ansprüche, wobei das Verhältnis der maximalen Tiefe der Vertiefung in Schritt b) zur maximalen Tiefe der Kavität in Schritt e) vorzugsweise 2:3 bis 1 zu 5, besonders bevorzugt 1:2 bis 1:4 beträgt.

5. Verfahren nach einem der vorherigen Ansprüche, wobei die Vertiefung eine von ihrem Rand bis zu ihrem tiefsten Punkt kontinuierlich abfallende Bodenfläche aufweist.

6. Verfahren nach einem der vorherigen Ansprüche, wobei die Portionseinheit mindestens zwei, vorzugsweise mindestens drei und insbesondere mindestens vier Aufnahmekammern aufweist, wobei die Heizvorrichtung eine der Anzahl der Aufnahmekammern entsprechende Zahl an Vertiefungen aufweist, die in Schritt b) von den Teilbereichen des ersten Films bedeckt werden, welche in Schritt e) in die Kavität der Tiefziehmatrize unter Ausbildung der mindestens zwei, vorzugsweise mindestens drei und insbesondere mindestens vier Aufnahmekammern eingeformt werden.

7. Verfahren nach einem der vorherigen Ansprüche, wobei der Film ausgewählt ist aus der Gruppe der wasserlöslichen Filme.

8. Verfahren nach einem der vorherigen Ansprüche, wobei die Oberfläche der Heizvorrichtung im Bereich der Vertiefung wenigstens anteilsweise beschichtet ist.

9. Verfahren nach einem der vorherigen Ansprüche, wobei die Oberfläche der Heizvorrichtung im Bereich der Vertiefung(en) vollflächig beschichtet ist.

10. Verfahren nach einem der vorherigen Ansprüche, wobei sich der Film in Schritt c) unterhalb der Heizvorrichtung und oberhalb der in Schritt e) eingesetzten Tiefziehmatrize befindet und der Abstand zwischen der Oberfläche der Heizvorrichtung und der Oberfläche der Tiefziehmatrize weniger als 10 mm, vorzugsweise weniger als 5 mm, insbesondere 0,1 bis 2 mm und besonders bevorzugt 0,2 bis 1 mm beträgt.

11. Verfahren nach einem der vorherigen Ansprüche, wobei der erste wasserlösliche Film in Schritt b) nur an einer Seite mit der Heizvorrichtung in Kontakt gebracht wird.

12. Verfahren nach einem der vorherigen Ansprüche, wobei die Heizvorrichtung eine metallische Oberfläche aufweist und die metallische Oberfläche der Heizvorrichtung eine Temperatur im Bereich von 23 bis 150°C, vorzugsweise von 80 bis 135°C aufweist.

## Claims

1. A method of manufacturing a portion unit having at least one filled receiving chamber surrounded by a film, comprising the steps of
a) Transport of a first film in the direction of a heating device;
b) Bringing the first film into contact with a surface of the heating device;
c) Heating the first film using the heating device;
d) Remove the contact between the first film and the heating device;
e) Moulding the first heated film into the cavities of a thermoforming die, forming a receiving container with at least one receiving chamber;
f) Filling of at least one receiving chamber;
g) If necessary, closing and separating the filled receiving containers while forming the portion unit,
wherein the surface region of the heating device, which is brought into contact with the film, has at least one recess and the at least one recess is covered in step b) by the partial regions of the first film, which are moulded into the cavity of the thermoforming die in step e), wherein the outline of the opening surface of the recess is modelled on the outline of the opening surface of the cavity, **characterised in that** the outline of the opening surface of the recess is obtained from the outline of the opening surface of the cavity by a reduction factor of 0.6 to 0.8.

2. Method according to claim 1, wherein the recess has a hemispherical, compressed hemispherical, stretched hemispherical or compressed and stretched hemispherical spatial shape.

3. Method according to any one of the preceding claims, wherein the recess has a maximum depth (measured as the orthogonal distance between the opening surface and the bottom surface of the recess) of from 0.5 to 7 mm, preferably from 0.8 to 4 mm.

4. Method according to one of the preceding claims, wherein the ratio of the maximum depth of the cavity in step b) to the maximum depth of the cavity in step e) is preferably 2:3 to 1 to 5, particularly preferably 1:2 to 1:4.

5. Method according to any one of the preceding claims, wherein the recess has a continuously sloping bottom surface from its edge to its deepest point.

6. Method according to one of the preceding claims, wherein the portion unit has at least two, preferably at least three and in particular at least four receiving chambers, wherein the heating device has a number of recesses corresponding to the number of receiving chambers, which recesses are covered by the partial regions of the first film in step b),
which are moulded into the cavity of the thermoforming die in step e), forming at least two, preferably at least three and in particular at least four receiving chambers.

7. Method according to any one of the preceding claims, wherein the film is selected from the group of water-soluble films.

8. Method according to one of the preceding claims, wherein the surface of the heating device is at least partially coated in the region of the recess.

9. Method according to one of the preceding claims, wherein the surface of the heating device is fully coated in the region of the recess(es).

10. Method according to one of the preceding claims, wherein the film in step c) is located below the heating device and above the thermoforming die used in step e) and the distance between the surface of the heating device and the surface of the thermoforming die is less than 10 mm, preferably less than 5 mm, in particular 0.1 to 2 mm and particularly preferably 0.2 to 1 mm.

11. Method according to any one of the preceding claims, wherein the first water-soluble film is brought into contact with the heating device on only one side in step b).

12. Method according to any one of the preceding claims, wherein the heating device has a metallic surface and the metallic surface of the heating device has a temperature in the range from 23 to 150°C, preferably from 80 to 135°C.

## Revendications

1. Procédé de fabrication d'une unité de portion avec au moins une chambre de réception remplie entourée d'un film, comprenant les étapes suivantes
a) Transport d'un premier film en direction d'un dispositif de chauffage ;
b) Mise en contact du premier film avec une surface du dispositif de chauffage ;
c) Chauffage du premier film au moyen du dispositif de chauffage ;
d) Suppression du contact entre le premier film et le dispositif de chauffage ;
e) le moulage du premier film chauffé dans les cavités d'une matrice de thermoformage en formant un récipient de réception comportant au moins une chambre de réception ;
f) Remplissage d'au moins une chambre de réception ;
g) le cas échéant, fermer et séparer les récipients de réception remplis en formant l'unité de portion,
la zone de surface du dispositif de chauffage qui est mise en contact avec le film présentant au moins un creux et le au moins un creux étant recouvert à l'étape b) par les zones partielles du premier film qui sont formées à l'étape e) dans la cavité de la matrice d'emboutissage, le contour de la surface d'ouverture de la cavité étant reproduit sur le contour de la surface d'ouverture de la cavité, **caractérisé en ce que** le contour de la surface d'ouverture de la cavité est obtenu à partir du contour de la surface d'ouverture de la cavité par un facteur de réduction de 0,6 à 0,8.

2. Procédé selon la revendication 1, dans lequel la cavité présente une forme spatiale hémisphérique, hémisphérique comprimée, hémisphérique étirée ou hémisphérique comprimée et étirée.

3. Procédé selon l'une quelconque des revendications précédentes, dans lequel la cavité a une profondeur maximale (mesurée comme la distance orthogonale entre la surface d'ouverture et la surface de fond de la cavité) de 0,5 à 7 mm, de préférence de 0,8 à 4 mm.

4. Procédé selon l'une quelconque des revendications précédentes, dans lequel le rapport entre la profondeur maximale de la cavité à l'étape b) et la profondeur maximale de la cavité à l'étape e) est de préférence compris entre 2:3 et 1:5, de manière particulièrement préférée entre 1:2 et 1:4.

5. Procédé selon l'une quelconque des revendications précédentes, dans lequel la cavité présente une surface de fond en pente continue depuis son bord jusqu'à son point le plus bas.

6. Procédé selon l'une des revendications précédentes, dans lequel l'unité de portionnement présente au moins deux, de préférence au moins trois et en particulier au moins quatre chambres de réception, le dispositif de chauffage présentant un nombre de cavités correspondant au nombre de chambres de réception, qui sont recouvertes par les zones partielles du premier film à l'étape b), qui sont formées dans l'étape e) dans la cavité de la matrice de thermoformage en formant les au moins deux, de préférence au moins trois et en particulier au moins quatre chambres de réception.

7. Procédé selon l'une quelconque des revendications précédentes, dans lequel le film est choisi dans le groupe des films hydrosolubles.

8. Procédé selon l'une des revendications précédentes, dans lequel la surface du dispositif de chauffage est revêtue au moins partiellement dans la zone de la cavité.

9. Procédé selon l'une des revendications précédentes, dans lequel la surface du dispositif de chauffage est revêtue sur toute sa surface dans la zone de la ou des cavités.

10. Procédé selon l'une quelconque des revendications précédentes, dans lequel, à l'étape c), le film est situé en dessous du dispositif de chauffage et au-dessus de la matrice de thermoformage utilisée à l'étape e), et la distance entre la surface du dispositif de chauffage et la surface de la matrice de thermoformage est inférieure à 10 mm, de préférence inférieure à 5 mm, en particulier comprise entre 0,1 et 2 mm, et de manière particulièrement préférée comprise entre 0,2 et 1 mm.

11. Procédé selon l'une quelconque des revendications précédentes, dans lequel le premier film hydrosoluble est mis en contact avec le dispositif de chauffage sur un seul côté à l'étape b).

12. Procédé selon l'une quelconque des revendications précédentes, dans lequel le dispositif de chauffage comprend une surface métallique et la surface métallique du dispositif de chauffage a une température comprise dans la plage allant de 23 à 150°C, de préférence de 80 à 135°C.
